# EUROPEAN PATENT APPLICATION

(11) **EP 4 316 247 A1**
(43) Date of publication of application: **07.02.2024**
(21) Application number: 22188778.9
(22) Date of filing: 04.08.2022
(51) Int. Cl.: A23C 19/068, A23C 20/02, A23L 29/206, A23L 29/269, A23L 33/135, A23L 33/21, A23L 33/00

(54) **VEGETABLE STRETCHED-CURD CHEESE AND METHOD OF PRODUCTION**

(71) Applicant: DREAMFARM S.R.L. SB, 43038 Sala Baganza (Parma) (IT)
(72) Inventor: SANDEI, Mattia, 43038 Sala Baganza (PARMA) (IT)
(74) Representative: Biggi, Cristina

(57) **Abstract**

The present invention relates to the preparation of a food product that is proposed as a vegetable-based alternative to dairy products. Specifically, the invention relates to a method for obtaining a vegetable-based and/or vegan cheese derived from nuts, preferably from almonds and/or cashews, and/or seeds, characterised by being a vegetable stretched-curd cheese, preferably with a protective liquid, with organoleptic properties (appearance and consistency) similar to that of a dairy-derived mozzarella Furthermore, the invention relates to a vegetable stretched-curd cheese, preferably with a protective liquid, obtained with the method of the invention, a vegetable stretched-curd cheese, preferably with a protective liquid, and the use of combinations of food texturizing agents, preferably of natural origin, and even more preferably the use of combinations of natural dietary fibres, which allow for performing the step of stretching a vegetable-based cheese derived from nuts, in particular from almonds or cashews, and/or seeds.

## Description

### TECHNICAL FIELD

The present invention relates to a method for obtaining a vegetable-based and/or vegan cheese derived from nuts and/or seeds, preferably from almonds and/or cashews, characterised by being a vegetable stretched-curd cheese, preferably with a protective liquid, and with organoleptic properties (appearance and consistency) similar to that of a dairy-derived mozzarella.

### STATE OF THE ART

The demand for vegetable-based and/or vegan food products is continually growing, because of ethical convictions, for nutritional reasons and, last but not least, in consideration of the increasing problems of environmental sustainability. As is by now well known, the production of foods of animal origin, such as meat and dairy products, entails high soil and water consumption and causes emissions of carbon dioxide, a greenhouse gas. The production of some food products requires the use of ingredients of animal origin, as in case of milk for cheese production.

Cheeses are in fact obtained from liquid milk, which can be considered a colloidal medium comprising water, carbohydrates (lactose for the most part), lipids (in particular, saturated fatty acids), proteins (mostly casein and serum proteins, namely lactalbumin and lactoglobulin), vitamins and minerals.

In short, in cheese production the milk undergoes a heat treatment (thermisation or pasteurisation) and/or a physical one (microfiltration) in order then to be coagulated with an enzymatic means (rennet) and/or microbiological ones (in particular lactic bacteria). The curd thus obtained is broken up, cooked, placed in a mould, salted and left to mature.

In the case of mozzarella, after the curd has been broken and worked, there is a stretching step, in which the mature curd is worked until it becomes a white, elastic paste, then kneaded with almost boiling water. Stretching is followed by cutting off, in which the paste is divided into smaller masses, and salting, where the mozzarellas are immersed in brine (water and salt) with different concentrations depending on the dairy.

Cheese analogues are defined as products obtained by mixing various ingredients such as proteins and fats, whether of dairy or non-dairy origin, formulated to satisfy a specific functional need.

Historically, these products were formulated with the objective of reducing costs, above all in the case of cheeses for pizza. More recently, the sector of vegetable-based cheese analogues, aimed at reproducing the aesthetic and taste characteristics of different cheeses of dairy origin, has experienced strong commercial expansion and various products with different formulation strategies are available in the market.

Up to now the main alternatives to dairy cheeses have been produced using coconut or palm oil, starches (often modified), flours and hydrocolloids, in combination with beverages based on soybean, rice, peas, oats, cashews and almonds. Production entails cooking the ingredients at high temperatures and with high shear forces in a heating cutter. The hot, viscous, sticky mass that results is poured into moulds or casings made of plastic in order to be shaped.

However, it is difficult to replace the coagulant properties of caseins of animal origin, which make it possible to obtain a curd that can then be refined. Moreover, it is difficult to prepare a finished product that is free of the additives often used in vegetable-based products, e.g. emulsifiers, gums and other hydrocolloids, or also acids and acidity regulators used to reduce the pH of the products and improve the shelf life of vegetable-based cheeses.

In particular, the main products sold as vegetable-based alternatives to mozzarella of dairy origin (Mozzarisella, based on whole-grain rice, or Violife, a coconut oil- and starch-based mozzarella), have an organoleptic profile which is very different from that of dairy products. In fact, they show a low protein content (generally less than 3%), a high saturated fat content (greater than 10%) and a high carbohydrate content. The Nutri-Score of these vegetable-based alternatives (vegetable substitutes) is usually between E and D and their consistency is very far from the concept of mozzarella that one has, for example, in Italy, as they are not made from stretched curd. Furthermore, in these vegetable-based alternatives, no protective liquid is ever present.

Thus, there do not exist any vegetable-based alternatives to stretched-curd cheese that have a Nutri-Score of A, i.e. with a protein content above 3%, a low level of saturated fats, sugar and energy, which are products preferably obtained exclusively with ingredients of natural origin, preferably without food additives, and which are packaged in a protective liquid, have a white/whitish colour reminiscent of the cheese of animal origin and a fibrosity and consistency similar to stretched curd.

As regards colour, it should in fact be considered that in order to obtain a Nutri-Score nutritional profile in class A it is necessary to use vegetable protein sources characterised by "green and herbaceous" aromas, not particularly suitable, therefore, for applications as vegetable-based alternatives to dairy-based cheeses, in particular mozzarella.

Moreover, the white/whitish colour that is typical of milk-based products is not easy to reproduce with vegetable protein sources, though the use of white powders such as starch and purified vegetable protein isolates is known, as is the use of coconut oil, which is white in colour.

It is further known that the use of some nut purees, in particular made from peeled almonds, which are particularly white, enables vegetable-based alternatives that optically resemble milk to be obtained.

Finally, using homogenisation to make food products (milk, emulsions, etc.) whiter is also known.

However, it remains particularly difficult to reproduce, in a vegetable-based mozzarella, the characteristics of fibrosity imparted by the caseins of milk when subjected to a stretching process.

In this regard, there exist a number of patent publications which describe methods for obtaining vegetable-based cheeses, but none of them describes the preparation of a vegetable stretched-curd cheese having a consistency and colour similar to mozzarella, preserved in a protective liquid.

By way of example, see European application EP3944766, in the name of Savencia SA, which describes a fermented vegetable-based cheese comprising comminuted nuts, which can be an almond puree, a transglutaminase, a starch source, lactic acid bacteria and water. This is not a stretched-curd cheese and it is not preserved in a protective liquid; therefore, the method described does not envisage any stretching step to obtain a vegetable-based product similar to animal-derived mozzarella. International application WO20089383 relates to vegetable-based cheese compositions comprising dietary fibres that are not digestible by the human intestine, vegetable proteins, lipids, including almond oil, and calcium, without further additives. In this case as well the vegetable-based cheeses described are not stretched-curd cheeses and are not preserved in a protective liquid; consequently, the method of production described does not envisage any stretching step to obtain a vegetable-based product similar to animal-derived mozzarella.

Finally, US application US2020100529 relates to a method for obtaining a vegetable-based product, yogurt or vegetable curd that can also become a vegetable-based cheese through the addition of stabilisers such as pectin, starting from partially de-oiled almond flour. In the latter case as well, the product obtained with the method described is not a stretched-curd cheese with a protective liquid and the method for obtaining it does not envisage stretching steps.

Thus, there remains a felt need for a method to obtain a vegetable stretched-curd cheese with a protective liquid, with organoleptic properties (appearance and consistency) similar to those of a dairy-derived mozzarella (i.e. of animal derivation).

### DEFINITIONS

Unless otherwise defined, all the terms of the art, notations and other scientific terms used herein are intended to have the meanings commonly understood by those who are skilled in the art to which this description pertains. In some cases, terms with commonly understood meanings are defined herein for the sake of clarity and/or ease of reference; the inclusion of such definitions in the present description should thus not be interpreted as representing a substantial difference from what is generally comprised in the art.

The terms "comprising", "having", "including" and "containing" are to be understood as open-ended terms (i.e. the meaning of "comprising, but not limited to") and are to be considered as a support also for terms like "consist essentially of", "consisting essentially of", "consist of" or "consisting of". For all the intervals indicated in the text, figures and claims of the present patent application, it is understood that the endpoints of these intervals are included.

The terms "obtainable", "obtained", "obtainable directly from", "obtained directly from" are considered equivalent.

The term "Nutri-Score" refers to a food product labelling system developed in France and conceived to simplify the identification of the nutritional values of a food product through the use of two correlated scales: a colour scale divided into 5 shades from green to red, and an alphabetic one comprising the five letters from A to E. A product considered to be healthy corresponds to the letter A or colour green, and one considered to be less healthy to the colour red or letter E.

"Nuts" means edible seeds with a high content of nutrients, in particular polyunsaturated fats. Examples of nuts are: cashews, peanuts, almonds, hazelnuts, walnuts, Brazil nuts, macadamia nuts, pecans and pine nuts.

The terms "food texturizing agents", also indicated in the text as "texturizing agents" or "food texturizers" or "texturizers" mean food additives enabling the physical properties of a dish to be modified without significantly modifying its flavour. They include thickening agents, which increase viscosity, gelling agents, which impart a gel consistency to the food, stabilisers, which improve a food's stability, emulsifiers, which improve the suspension of the ingredients and binders, which agglomerate solid particles in powder form. Food texturizing agents can also be of natural origin, as in the case, for example, of dietary fibres.

"Base" means the mixture obtained with the method of the invention prior to the stretching step.

"Protective liquid" means "preserving liquid".

The terms "vegetable-based alternative" and "vegetable-based substitute" are synonymous and indicate a food product or preparation that can substitute for a food of animal (dairy) origin.

The term "salt" means at least one salt selected from: sodium chloride, potassium chloride and magnesium chloride, optionally iodised. It also mean a mixture of one or more of the aforesaid salts.

The term "seeds" means seeds belonging to the Rosaceae family, for example cherry, peach, apricot, European plum or Japanese plum.

All the percentages indicated herein are to be understood as percentages by weight.

### SUMMARY OF THE INVENTION

The subject matter of the present invention relates to a method for obtaining a vegetable-based cheese derived from nuts and/or seeds, in particular almonds and/or cashews, characterised by being a vegetable stretched-curd cheese with a protective liquid, with organoleptic properties (appearance and consistency) similar to those of a dairy-derived mozzarella (of animal origin).

Furthermore, the invention relates to vegetable stretched-curd cheese, preferably with a protective liquid, obtained with the method of the invention. The invention also relates to a vegetable stretched-curd cheese, preferably with a protective liquid.

The invention also relates to the use of food texturizing agents, in particular of natural dietary fibres, which allow for performing the step of stretching the vegetable-based cheese derived from nuts and/or seeds of the invention.

### BRIEF DESCRIPTION OF THE FIGURES

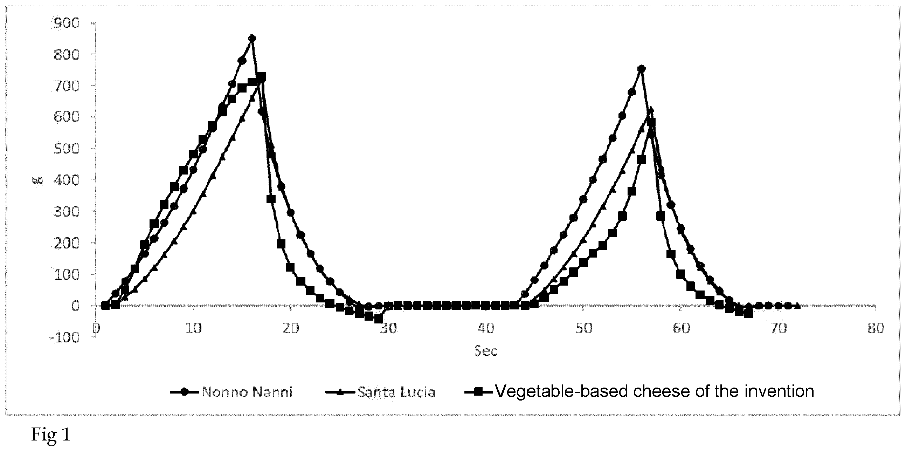

Figure 1 shows a comparison between the TPA (Texture Profile Analysis) of the vegetable-based cheese of the invention and that of two commercial mozzarellas.

### DETAILED DESCRIPTION OF THE INVENTION

The present invention relates to a method for obtaining a vegetable-based cheese derived from nuts, in particular almonds and/or cashews, and/or seeds, preferably belonging to the Rosaceae family, for example cherry, peach, apricot, European plum and/or Japanese plum, characterised by being a vegetable stretched-curd cheese, preferably with a protective liquid, with organoleptic properties (appearance and consistency) similar to those of a dairy-derived mozzarella (of animal origin).

In the method of the invention, the main ingredients used for processing are nuts, preferably almonds and/or cashews, and/or seeds, preferably cherry, peach, apricot, European plum and/or Japanese plum, and probiotic and/or thermophilic and/or mesophilic bacterial strains for fermentation. Furthermore, mixtures of food texturizing agents are used.

According to a preferred aspect, in the method of the invention use is made exclusively of, as the main ingredients, ingredients of vegetable origin (i.e. not animal-derived), such as: nuts, preferably almonds and/or cashews, and/or seeds, preferably cherry, peach, apricot, European plum and/or Japanese plum, probiotic and/or thermophilic and/or mesophilic bacterial strains for fermentation and, mixtures of food texturizing agents of vegetable origin, preferably texturizing dietary fibres.

According to a more greatly preferred aspect, in the method of the invention almonds are used as the nuts.

The subject matter of the invention thus relates to a method for producing a vegetable stretched-curd cheese which preferably comprises, in sequence, the steps of:
I) mixing a paste comprising nuts and/or seeds with water;
II) fermenting the homogenised mixture with probiotic and/or thermophilic and/or mesophilic bacterial strains to obtain a fermented base;
III) adding at least one texturizing agent and proceeding to stretch the fermented base, thereby obtaining the vegetable stretched-curd cheese.

Between the mixing step I and the fermentation step II it is possible to carry out a homogenisation step, under pressure, of the mixture obtained in step I), preferably at a temperature of between 50°C and 100°C, even more preferably between 65°C and 95°C.

Optionally, in step III), together with the texturizing agent, it is possible to add salt before stretching the fermented base.

After these steps, the vegetable stretched-curd cheese is portioned and shaped, preferably in a time ranging between 2 and 6 seconds, into smooth, homogeneous hemispherical masses and cooled during the forming step. The hemispherical masses are immersed in a salt solution, preferably containing 0.1-15% salt. The salt solution allows the hemispherical masses of vegetable stretched-curd cheese obtained with the method of the invention to float.

Furthermore, the method of the invention can comprise a step of packaging the hemispherical masses of vegetable stretched-curd cheese obtained in a protective liquid, wherein said protective liquid contains salt, preferably in the same amount as was optionally added during preparation of the fermented base.

Finally, the method of the invention can comprise a step of cooling the vegetable stretched-curd cheese packaged with the protective liquid, at a storage temperature of between 2° and 12°C, preferably between 4°C and 8° C.

The nuts and/or seeds used in step I) are ground to form a paste, preferably with a particle size of between 10 and 150 µm and even more preferably between 20 and 50 µm. With this particle size the paste takes on a fluid consistency.

The almonds are preferably almonds that are peeled prior to grinding, more preferably they are raw almonds.

In one embodiment, the nut and/or seed paste is mixed with at least one protein concentrate and/or isolate, preferably at least one protein concentrate and/or isolate deriving from: peas, preferably yellow, oats, mung beans, sunflowers and rice

The protein concentrate and/or isolate is present in the mixture in an amount of between 0.5 and 5%, preferably 1-2%.

The paste obtained from the nuts and/or seeds, optionally in a mixture with the protein isolate and/or concentrate, is mixed with water, preferably in a ratio comprised in an interval of between 10:90 and 45:55 (weight/weight). Mixing with water preferably leads to the formation of an emulsion.

In one embodiment, during mixing a pasteurisation is carried out by means of a heat treatment, preferably at a temperature of between 65°C and 90°C, preferably between 72°C and 76 °C.

The mixture obtained in step I) can be homogenised under pressure prior to step II), preferably at the same pasteurisation temperature, i.e. at a temperature of between 65°C and 90°C, preferably between 72°C and 76°C. According to a preferred aspect, the homogenisation under pressure takes place in two stages. In the first stage, the operating pressure is 100 - 200 bar (10,000 - 20,000 Kpa), and in the second stage, the operating pressure is 10-80 bar (1,000-8,000 Kpa).

Thanks to the homogenisation step, the mixture, in particular the emulsion, becomes stable and takes on a white/whitish colour.

Once stabilised, the mixture is preferably cooled at a temperature of between 20°C and 40°C, more preferably between 30°C and 38°C. Subsequently the mixture is inoculated with probiotic and/or thermophilic and/or mesophilic bacterial strains in order to obtain a fermented base. According to a preferred aspect, the probiotic strains used are strains of Lactobacillus acidophilus and Bifidobacterium animalis ssp. Lactis, which bring about an increase in the viscosity of the base by producing exopolysaccharides (EPS).

The preferred mesophilic bacterial strains are mesophilic cultures of Lactococcus lactis ssp. Lactis, which produces aromatic notes typical of dairy products.

The thermophilic bacterial strains are strains of Streptococcus thermophilus. According to a preferred aspect, the cooled mixture is inoculated and fermented with Streptococcus thermophilus, Lactobacillus acidophilus, Bifidobacterium animalis ssp. Lactis and Lactococcus lactis ssp. Lactis. Fermentation takes place for a period of time of between 5 and 48 hours, until the pH of the base reaches a value of between 4 and 6.5, preferably between 4.2 and 4.5, and the viscosity increases considerably (for example to between 60000-90000 Cps). Fermentation enhances the organoleptic profile of the base, which will thus lose the "hazelnut" aromas typical of oil-bearing nuts. The new aromatic profile is similar to that of a fermented dairy product.

The fermented base is then transferred into a stretching machine for the stretching step (thermomechanical treatment).

According to a preferred aspect, the fermented base is directly introduced into a processing compartment and subjected to a mechanical action at a temperature of between 50 and 90° C, preferably between 60 and 75°C.

At least one texturizing agent is then added, preferably in an amount comprised in the interval between 1% and 5% by weight, relative to the total weight of fermented base, preferably in an amount of between 2% and 4%. According to a preferred aspect, the texturizing agents are dietary fibres. According to a further preferred aspect, the dietary fibres are selected from psyllium fibre, bamboo fibre, soluble maize fibre, oat fibre, pea fibre, flax flour, potato fibre, citrus fibre and apple fibre.

In one embodiment, the dietary fibres are a mixture of at least two of the following: psyllium fibre, bamboo fibre and soluble maize and/or pea fibre. Each psyllium, bamboo, oat and pea fibre and the flax flour is preferably used in an amount of 0.5% to 4% by weight, preferably 1.5% to 2.5%. The soluble maize and/or pea fibre is preferably used in an amount of 0.5% to 10%, preferably 1% to 5% by weight.

At least one texturizing agent is used in addition or as an alternative to the dietary fibres and is selected from: carboxymethylcellulose, hydroxypropyl methylcellulose, methylcellulose, sodium alginate, Guar gum powder, carob seed flour, xanthan gum, pectin and combinations thereof.

Preferably, the further texturizing agent is used in combination with one or more dietary fibres.

Salt is added together with the texturizing agent, preferably in an amount of between 0.1 and 3%, preferably between 0.5 and 1.5%.

The texturizing agent, in combination with the thermomechanical action applied by the stretching machine allows the fermented base to pass from a viscous, discontinuous mixture to a vegetable stretched-curd cheese, characterised by a fibrous, continuous structure typical of a stretched curd cheese of animal origin, such as mozzarella.

In fact, as a result of the thermomechanical treatment, the polysaccharides present in the food texturizing agents aggregate, forming stronger bonds, and increase the viscosity of the fermented base.

As soon as the vegetable stretched-curd cheese reaches the desired characteristics, it is hot extruded and simultaneously portioned so as to give it a smooth, homogeneous hemispherical shape, preferably in a time ranging between 2 and 30 seconds, more preferably between 4 and 10 seconds.

In order to maintain the product's shape intact, recourse is had to a rapid cooling, which takes place, for example, under the flow of a 4-8% salt solution after the forming of the product, followed by the deposit of the portions of vegetable-based cheese in a vat containing an aqueous solution, preferably a salt solution (4-8% salt), which allows them to float.

The hemispheres of vegetable stretched-curd cheese are preferably packaged in a protective liquid containing the same amount of salt as the cheese mixture and can be stored at a refrigeration temperature of between 2°C and 12°C preferably between 4°C and 8° C.

The subject matter of the invention relates to the vegetable stretched-curd cheese obtainable with the above-described method.

In particular, the vegetable-based cheese obtainable with the method of the invention is characterised by an amount of saturated fats of between 0.5 and 25% by weight relative to the total weight of the cheese, preferably less than 5%, or less than 3% or less than 2% or 1.5%.

The subject matter of the invention also relates to the vegetable stretched-curd cheese obtainable with the above-described method, packaged in a protective liquid, preferably containing salt.

In one embodiment, the vegetable stretched-curd cheese comprises nuts and/or seeds in an amount of between 2% and 40%, preferably between 15% and 25%; at least one texturizing agent, preferably at least one dietary fibre, in an amount of between 0.5% and 10% by weight, preferably between 0.5% and 5%; and water up to 100%.

The vegetable stretched-curd cheese obtainable with the above-described method preferably has a protein content of between 2.5 and 10%, even more preferably between 4 and 6%.

The vegetable stretched-curd cheese obtainable with the above-described method is preferably a vegetable-based mozzarella, preferably with a protective liquid.

The subject matter of the invention also relates to a vegetable stretched-curd cheese, preferably with a protective liquid, comprising nuts and/or seeds in an amount of between 2% and 40%, preferably between 15% and 25%; saturated fats in an amount of between 0,5 and 25%; at least one texturizing agent, preferably at least one dietary fibre, in an amount of between 0.5% and 10% by weight, preferably between 0.5% and 5%; and water up to 100%.

The vegetable stretched-curd cheese of the invention preferably has a protein content of between 2.5 and 10%, even more preferably between 4 and 6%.

The vegetable stretched-curd cheese of the invention is preferably a vegetable-based mozzarella, preferably with a protective liquid.

Finally, the subject matter of the invention also relates to the use of the combination comprising at least two of the following: psyllium fibre, bamboo fibre and soluble maize fibre, oat fibre, pea fibre and flax flour, as a texturizing agent for stretching a vegetable nut-based cheese, preferably based on almonds and/or cashews, and/or seeds.

According to a more greatly preferred aspect, the combination comprises at least two of the following: psyllium fibre, bamboo fibre and soluble maize fibre, oat fibre, pea fibre and flax flour.

### EXAMPLE 1

| Component | Percentage |
|---|---|
| Water | 61,28% |
| Peeled almond paste | 23,47% |
| Salt | 1,04% |
| Water added during stretching | 10,43% |
| Soluble maize fibre | 0,52% |
| Flax flour | 1,30% |
| Bamboo fibre | 1,96% |

The peeled raw almond paste is hydrated with water and salt is added. The mixture is pasteurised and homogenised.

The selected fermenting agents are added once the T° of the mixture reaches a range of between 20 and 40°C and it is maintained for a period of between 5 and 48h until a pH of 4.3-4.5 is reached.

The semi-finished product obtained is subsequently subjected to a thermomechanical treatment, in which the added texturizing agents (flax flour, bamboo fibre, soluble maize fibre) are mixed and activated.

Once the desired T° and consistency are reached, the forming process is initiated.

The nutritional composition of the finished product has the following values:

| | |
|---|---|
| ENERGY VALUE | ≈164Kcal/100 g |
| PROTEINS | 5.15 g/100g* |
| FATS | 12.1 g/100g |
| of which saturated fatty acids | 0.9 g/100g |
| CARBOHYDRATES | 2.00 g/100g |
| of which sugars | 1.2 g/100g |
| DIETARY FIBRES | 5.2 g/100g |
| SODIUM | ≈0.36g/100g |

Examples 2 to 7 are obtained with the same procedure as described for example 1.

### EXAMPLE 2

| Component | Percentage |
|---|---|
| Water | 60.88% |
| Almond paste | 23.32% |
| Isolated pea proteins | 1.30% |
| Salt | 1.04% |
| Soluble maize fibre | 0.52% |
| Water added during stretching | 10.36% |
| Flax flour | 1.30% |
| Bamboo fibre | 1.30% |

### EXAMPLE 3

| Component | Percentage |
|---|---|
| Water | 60.88% |
| Almond paste | 23.32% |
| Oat syrup | 1.30% |
| Salt | 1.04% |
| Soluble maize fibre | 0.52% |
| Added water | 10.36% |
| Psyllium fibre | 1.30% |
| Bamboo fibre | 1.30% |

### EXAMPLE 4

| Component | Percentage |
|---|---|
| Water | 61.52% |
| Cashew paste | 23.56% |
| Salt | 1.31% |
| Soluble maize fibre | 0.52% |
| Added water | 10.47% |
| Citrus fibre | 1.31% |
| Bamboo fibre | 1.31% |

### EXAMPLE 5

| Component | Percentage |
|---|---|
| Water | 61.68% |
| Cashew paste | 23.62% |
| Salt | 1.05% |
| Pea fibre | 0.52% |
| Water added during stretching | 10.50% |
| Psyllium | 1.31% |
| Bamboo fibre | 1.31% |

### EXAMPLE 6

| Component | Percentage |
|---|---|
| Water | 61.68% |
| Almond paste | 23.62% |
| Salt | 1.05% |
| Oat fibre | 0.52% |
| Water added during stretching | 10.50% |
| Potato | 1.31% |
| Bamboo fibre | 1.31% |

### EXAMPLE 7

| Component | Percentage |
|---|---|
| Water | 61.68% |
| Peeled almond paste | 23.62% |
| Salt | 1.05% |
| Flax flour | 0.52% |
| Water added during stretching | 10.50% |
| Psyllium fibre | 1.31% |
| Bamboo fibre | 1.31% |

### Analysis of the texture of the vegetable-based cheese

The vegetable-based cheese (vegetable-based mozzarella) of example 1 was compared from the standpoint of texture with two types of milk-based mozzarellas. The comparison was performed by subjecting the samples to TPA (Texture Profile Analysis).

The values obtained are the mean of 3 measurements.

| | Hardness (grams) | Elasticity index | Compactness index |
|---|---|---|---|
| Vegetable-based cheese of example 1 | 730.13 | 0.84 | 0.44 |
| Nonno Nanni^{®} Mozzarella | 851.09 | 0.87 | 0.79 |
| Santa Lucia^{®} Mozzarella | 720.57 | 0.87 | 0.76 |

| | | | |
|---|---|---|---|
| Note: the elasticity index is measured in different ways; it is preferably calculated by dividing the distance of the height observed during the second compression by the original compression distance. | | | |

The compactness is measured by dividing the working area measured during the second compression by the working area during the first compression.

Considering that the hardness refers to the maximum peak force needed to perform the first compression, the values obtained show that the mozzarella of example 1 is comparable in particular to the Santa Lucia^{®} milk-based mozzarella.

The elasticity, by contrast, describes how well a product returns to its original state after the first deformation and this parameter as well shows how the differences between the various products are minimal.

The compactness is the parameter that indicates the resistance to chewing. The higher this value is, the greater the number of chews to be applied in order to reduce palatability. Based on the data collected, it is clear that in this condition the cheese of example 1 does not have the same resistance to chewing. A plausible explanation of this behaviour is attributable to the intrinsic nature of the raw materials. In the case of the vegetable-based cheese, the fibrous structure is obtained with vegetable fibres, whereas in milk-based mozzarella it is obtained with caseins (functional milk proteins), which, as they have stronger molecular interactions compared to vegetable fibres, could explain this greater resistance to chewing.

Figure 1 shows the graphs obtained from the mean of the various measurements, which in any case show a very similar TPA profile among the various products, notwithstanding that the origin of the raw materials is distinctly different.

The data collected show that, from a structural standpoint, there are many similarities between the vegetable-based cheese and the product obtained from cow's milk. From a visual standpoint as well the differences are minimal.

The only parameter in the process of being improved is resistance to chewing/compactness.

## Claims

**1.** A method for producing a vegetable stretched-curd cheese, the method comprising the steps of:
I) mixing a paste comprising ground nuts and/or seeds with water;
II) fermenting the homogenised mixture with probiotic and/or thermophilic and/or mesophilic bacterial strains to obtain a fermented base;
III) adding at least one texturizing agent and proceeding to stretch the fermented base.

**2.** The method according to claim 1 wherein the nuts of step I) are selected from almonds, cashews, peanuts, hazelnuts, walnuts, Brazil nuts, macadamia nuts, pecans and/or pine nuts, preferably they are selected from almonds and/or cashews, and/or wherein the seeds of step I) are selected from Rosaceae seeds, preferably cherry, peach, apricot, European plum and/or Japanese plum.

**3.** The method according to claim 1 and 2, wherein the nuts and/or seeds used in step I) are ground to form a paste, preferably with a particle size of between 10 and 150 µm and even more preferably between 20 and 50 µm.

**4.** The method according to any one of the preceding claims, wherein the nut and/or seed paste is mixed with at least one protein concentrate and/or isolate, preferably at least one protein concentrate and/or isolate deriving from: peas, preferably yellow, oats, mung beans, sunflowers and rice.

**5.** The method according to any one of the preceding claims, wherein after step I and before step II a step of homogenising the mixture obtained in step I is performed under pressure.

**6.** The method according to any one of the preceding claims, wherein the probiotic strains used are strains of Lactobacillus acidophilus and Bifidobacterium animalis ssp. Lactis.

**7.** The method according to any one of the preceding claims, wherein the mesophilic bacterial strains are mesophilic cultures of Lactococcus lactis ssp. Lactis.

**8.** The method according to any one of the preceding claims, wherein the thermophilic bacterial strains are strains of Streptococcus thermophilus.

**9.** The method according to any one of the preceding claims, wherein the at least one texturizing agent is added in an amount comprised in the interval between 1% and 5% by weight, relative to the total weight of the fermented base, preferably in an amount of between 2% and 4%.

**10.** The method according to any one of the preceding claims, wherein the at least one texturizing agent is selected from psyllium fibre, bamboo fibre, soluble maize fibre, oat fibre, pea fibre, flax flour, carboxymethylcellulose, hydroxypropyl methylcellulose, methylcellulose, sodium alginate, Guar gum powder, carob seed flour, xanthan gum and pectin.

**11.** The method according to any one of the preceding claims, wherein salt is added in step III, before stretching of the fermented base.

**12.** The method according to any one of the preceding claims, further comprising the steps of portioning the vegetable stretched-curd cheese obtained after step III and, preferably, packaging in a protective liquid.

**13.** A vegetable stretched-curd cheese obtainable with the method according to any one of claims 1 to 12.

**14.** The cheese according to claim 13, comprising an amount of saturated fats of between 0.5 and 25% by weight relative to the total weight of the cheese, preferably less than 5%, more preferably less than 2% or less than 1.5%.

**15.** The cheese according to claim 13, comprising nuts and/or seeds in an amount of between 2% and 40%, preferably between 15% and 25%; at least one texturizing agent, preferably at least one dietary fibre, in an amount of between 0.5% and 10% by weight, preferably between 0.5% and 5%; and water up to 100%.

**16.** A vegetable stretched-curd cheese comprising nuts and/or seeds in an amount of between 2% and 40%, preferably between 15% and 25%; saturated fats in an amount of between 0.5 and 25%; at least one texturizing agent, preferably at least one dietary fibre, in an amount of between 0.5% and 10% by weight, preferably between 0.5% and 5%; and water up to 100%.

**17.** The cheese according to claim 16, comprising at least one protein concentrate and/or isolate, preferably at least one concentrate and/or isolate deriving from: peas, preferably yellow, oats, mung beans, sunflowers and rice.

**18.** The cheese according to claim 13 or claims 16 and 17, with a protein content of between 2.5 and 10%, preferably between 4 and 6%.

**18.** The cheese according to any one of claims 13 to 18, wherein the cheese is a vegetable-based mozzarella, preferably preserved in a protective liquid.

**19.** Use of a combination of at least two of the following: psyllium fibre, bamboo fibre, soluble maize fibre, oat fibre, pea fibre and flax flour, as a texturizing agent for stretching a vegetable cheese based on nuts, preferably based on almonds and/or cashews, and/or seeds.
